# EUROPÄISCHE PATENTSCHRIFT

(11) **EP 1 299 001 B1**
(45) Veröffentlichungstag und Bekanntmachung des Hinweises auf die Patenterteilung: **07.09.2005**
(21) Anmeldenummer: 01962850.2
(22) Anmeldetag: 11.07.2001
(51) Int. Cl.: A22C 25/16

(54) **VERFAHREN UND VORRICHTUNG ZUM FILETRIEREN GEKÖPFTER, GESCHLACHTETER UND IN IHRER BAUCHHÖHLE GEÖFFNETER FISCHE**
METHOD AND DEVICE FOR FILLETING KILLED AND HEADLESS FISH, THE ABDOMINAL CAVITY OF WHICH IS OPENED UP
PROCEDE ET DISPOSITIF PERMETTANT DE LEVER DES FILETS SUR DES POISSONS TUES, ETETES ET VIDES

(30) Priorität: 11.07.2000 DE 10034936; 14.08.2000 DE 20014211 U
(43) Veröffentlichungstag der Anmeldung: 09.04.2003
(73) Patentinhaber: NORDISCHER MASCHINENBAU RUD. BAADER GMBH + CO KG, 23560 Lübeck (DE)
(72) Erfinder: BRAEGER, Horst, H., 23560 Lübeck (DE); MÖLLER, Wolfgang, 23566 Lübeck (DE); SCHMÜSER, Dirk, 26311 Sereetz (DE)
(74) Vertreter: Wenzel & Kalkoff
(86) Internationale Anmeldenummer: PCT/EP2001/008003
(87) Internationale Veröffentlichungsnummer: WO 2002/003807

(56) Entgegenhaltungen:
- EP-A- 0 771 530
- DE-B- 2 912 982
- DE-C- 3 403 771
- DE-C- 3 518 960
- US-A- 4 336 634

## Beschreibung

Die Erfindung betrifft ein Verfahren zum Filetieren geköpfter, geschlachteter und in ihrer Bauchhöhle geöffneter Fische, insbesondere bei der Massenverarbeitung von Zuchtfischen vor allem der Spezies Tilapia, wobei die Filets im Rückenbereich mittels bis an die Wirbelsäule geführter, die Rückenspeichen freilegender Rückenschnitte und bauchseitig einerseits im Schwanzbereich mittels bis an die Wirbelsäule geführter, die Bauchspeichen freilegender Bauchschnitte sowie über die Wirbelsäule hinweg geführter, die Rücken- und Bauchschnitte verbindender Trennschnitte und andererseits mittels schabenden oder schälenden Trennens, das bei ausweichlichem Gegendruck entlang der die Bauchhöhle umgebenden Rippen von der Wirbelsäule her erfolgt, vom Grätengerüst gelöst werden. Weiter betrifft die Erfindung eine entsprechende Filetiervorrichtung, umfassend Rückenmesser zum Freilegen der Rückenspeichen bis an die Wirbelsäule heran; Bauchmesser zum Freilegen der Bauchspeichen im Schwanzbereich bis an die Wirbelsäule heran; Trennmesser zum Trennen der Filets im Schwanzbereich von der Wirbelsäule unter Durchschneiden des von Bauch- und Rückenmessern um die Wirbelsäule, d.h. zu beiden Seiten derselben belassenen Steges; ein Schälmesser und Schälmessergegenlagen einschließendes Schabewerkzeug zum schabenden/schälenden Trennen der Filets von den die Bauchhöhle umgebenden Rippen bei ausweichlichem Gegendruck von der Wirbelsäule her; einen endlosen Förderer zum Transport der Fische Schwanz voraus und an den zu beiden Seiten einer gedachten Förderebene angeordneten, genannten Werkzeugen vorbei sowie eine Anzahl auf dem Förderer angeordneter Fischsättel zur sicheren Aufnahme der Fische in ihrer Bauchhöhle zum Zwecke des Transports und der Bearbeitung mittels der Werkzeuge.

Verfahren und Vorrichtung dieser Art sind grundsätzlich aus der DE-A1 14 54 089 bekannt. Bei der bekannten Vorrichtung hat man neben den im Bereich des Fischfiletierens grundsätzlich bekannten Bauchfiletier- und Rückenfiletier- sowie Trennmessern zum Freischneiden der Rippen ein Schabewerkzeug vorgesehen, das mit seiner Schneidkante direkt über die Oberfläche der Rippen bzw. Wirbelfortsätze schabt, so daß gegenüber früher bekannten starren Rippenmessern in diesem Bereich kein Filetfleisch mehr am Grätengerüst verbleibt und die Ausbeute verbessert werden kann. Bei Verwendung solcher Schabewerkzeuge ist gegenüber Vorrichtungen mit starren Rippen-Kreismessem, wie sie zuvor jahrzehntelang Verwendung fanden, eine Vorverlegung des Trennschnittes zur Trennung der an den Seiten des Rückgrates nach den Bauch- und Rückenfiletierschnitten verbliebenen Fleischbänder vor den Rippenschnitt erforderlich, weil das starr in der Ebene der Unterkanten der Rückenführungen liegende Schabemesser infolge seiner pflugartigen Wirkung das Filet von den Rippen bzw. Wirbelfortsätzen abschiebt. Dafür muß aber das Filet im Schwanzbereich vollständig gelöst sein.

Bei einer solchen Schnittfolge hat sich jedoch gezeigt, daß durch die auf die Filets in diesem Bereich wirkenden Stauchkräfte Unregelmäßigkeiten in der Schnittführung auftreten, die das Filetierergebnis qualitativ und ausbeutemäßig beeinträchtigen. Darüber hinaus ist es nicht möglich, sicherzustellen, daß die abgetrennten Filets stets in eindeutiger Lage, beispielsweise plan auf der Hautseite liegend, abgegeben werden können, was Voraussetzung für eine problemlose automatische Weiterverarbeitung, z.B. das Enthäuten, war und ist.

Um diesen Nachteilen abzuhelfen, wurde die aus der DE-B1 29 46 042 bekannte Vorrichtung entwickelt, bei der das Schabewerkzeug mit je einem zu beiden Seiten von Bauch- und Rückenführungen angeordneten, neben diesen in einer Spitze beginnenden Schabemesser mit keilförmig auseinanderlaufender Schneidkante und einer dieser zugeordneten und mit dieser einen Spalt bildenden, ebenfalls von einer Spitze neben der Bauchführung ausgehenden wulstförmigen, gegenüber dem Schabemesser federnd ausweichlichen Gegenlage ausgebildet ist. Dabei ist das Schabewerkzeug derart höhenverstellbar, daß kurz vor Ankunft des Bauchhöhlenendes des Fisches jedes Schabemesser mindestens mit seiner Spitze aus einer Stellung unterhalb der Oberkante der Bauchführungen in die Nähe der Unterkanten der Rückenführungen und jede Gegenlage ebenfalls mit mindestens ihrer Spitze aus einer Stellung im Bereich der Bauchführungen in die Nähe der Oberkanten derselben bewegbar sind. Damit werden die Filets infolge der nach Anbringen der Bauch- und Rückenfiletierschnitte noch erhaltenen, bis in die Schwanzwurzel reichenden Verbindung zum Skelett in gestrecktem Zustand den Schabekräften unterworfen, was zu einer deutlich glatteren Schnittfläche und entsprechend verbesserter Ausbeute führt. Auch wird durch die erst nach dem Schabevorgang mittels der Trennschnitte erfolgende vollständige Freigabe der Filets erreicht, daß diese für die automatische Weiterverarbeitung lagerichtig abgelegt werden können.

Diese bekannte Maschine arbeitet für verschiedene Fischsorten wie Rotbarsch, Thunfisch und der Familie der Lachse zuzuordnende Fische mit - im Gegensatz zu den Gadiden wie Seelachs, Dorsch etc. - direkt zum Anus hin verlaufender oberer Bauchhöhlenwand weitgehend zufriedenstellend. Deshalb wurde versucht, solche Einrichtungen und Verfahren auch für andere Fischarten, vor allem Tilapia, einen Massen- und/oder Zuchtfisch mit dem Rotbarsch ähnelnder Körperform und Grätengrundstruktur, einzusetzen und anzupassen, was jedoch zu keinen befriedigenden Filetierergebnissen führte, weil einerseits bei der Spezies Tilapia qualitativ maßgebliche Abweichungen zu dem "normalen" Grätengerüst und der üblichen Struktur der Bauchhöhle in in der Summe ungewöhnlich großem Umfang vorhanden sind, so daß eine auf diesen Fisch bezogene universelle Anwendung der bekannten Maschine nicht in Betracht kommt. So weist der Tilapia ausgesprochen starke, gebogene Flankengräten auf, die ein "Glätten " durch das bekannte Schabewerkzeug nicht oder nur äußerst beschränkt zulassen, weil dieses Werkzeug im wesentlichen mit der (vertikalen) Förderebene einen Winkel von 90° einschließt, also die Rippen in den beiden Werkzeugteilen praktisch über 180° streckt. Damit kommt es zu Fleischverlusten. Weiter sind bei dieser Fisch-Spezies die Rippen- oder Flankengräten relativ lose am Hauptkörper befestigt, wodurch es beim herkömmlichen Schäl- oder Schabevorgang bzw. den hierfür eingesetzten Vorrichtungen leicht zum Abreißen dieser Gräten vom Hauptkörper/Grätengerüst sowie folglich ihrem Verbleib ein Filet und damit zu einem minderwertigen Produkt kommen würde. Auch ist im Bauchhöhlenbereich unterhalb der Flankengräten auf jeder Seite je ein im wesentlichen aus Fettgewebe bestehender Innenwulst vorhanden. Zwischen diesen beiden Wülsten ist eine lederhautartige Verbindung zur Unter- oder Abteilung zwischen Bauchhöhle und Schwimmblase gespannt. Mit anderen Worten hat der Tilapia im Gegensatz zu den vorgenannten üblichen Fischen, die eine zweiteilige Schwimmblase im oberen Bereich der Bauchhöhle zu beiden Seiten des Rückgrats/ der Wirbelsäule aufweisen, eine einteilige, sehr große Schwimmblase, die für die Bearbeitung auf herkömmlichen Maschinen erhebliche Probleme bereitet.

Hauptziel der Erfindung ist es daher, ein Verfahren und eine Vorrichtung zu schaffen, mit denen unter Umgehung der geschilderten Nachteile der bekannten Maßnahmen eine Bearbeitung speziell von Fischen der Spezies Tilapia möglich ist.

Ein weiteres Ziel der Erfindung ist es, die Herstellung sauberer Filets unter minimalem Personaleinsatz bei hohem Durchsatz zu ermöglichen. Das soll unter größtmöglicher Ausbeute erfolgen.

Diese Aufgabe wird bei dem Verfahren der eingangs bezeichneten Art dadurch gelöst, daß vor dem schälenden Trennen im Bereich der Bauchhöhle die Bauchlappen durch Abtrennen der Enden ihrer über die Rippen hinausragenden Bauchlappenteile besäumt werden und anschließend das schälende Trennen durch sich der Rippenkontur anpassende, mit mindestens zwei Freiheitsgraden geführte Schabe- oder Schälschnitte vollzogen wird.

Bei der Vorrichtung ist zum Lösen der Aufgabe vorgesehen, daß das Schabewerkzeug/die Schälmesser sowohl um eine im wesentlichen senkrecht zur Förderebene verlaufende Achse federnd ausweichlich schwenkbar als auch um eine im wesentlichen in Richtung der Schabe- oder Schälkanten verlaufende Scharnierachse gegen Federkraft von der Förderebene weg schwenkbar ist/sind und wahlweise vor dem Schabewerkzeug oder im Bereich desselben eine Besäumeinrichtung zum Besäumen der Bauchlappen im Bereich der Bauchhöhle durch zumindest teilweises Abtrennen der Enden ihrer über die Rippen hinausragenden Bauchlappenteile von den außen mit der Haupt bedeckten Filets angeordnet ist/sind.

Auf diese Weise schafft man einerseits mittels des Besäumens die Voraussetzung, die Filets beim Tilapia überhaupt durch Flankenschaben sauber vom Gerätengerüst ablösen zu können. Bei dieser Fischspezies ist nämlich außer den bereits erwähnten, auf der Innenseite der Bauchhöhle befindlichen, zwischen sich die lederartige Membran-Trennwand zur Schwimmblase aufspannenden Fettwülsten das Ende der Rippengeräten mit der Außenhaut verbunden, so daß beim Schaben in diesem Bereich Unsauberkeiten entstehen würden. Man entfernt also diese Bauchlappenteile, die sich im übrigen von der erwähnten Verbindungsstelle nach unter, d.h. zum Ende der Bauchhöhle hin wieder verdicken und extrem fetthaltig sind, so daß sie für ein hochwertiges verkaufsfähiges Produkt nicht in Betracht kommen, wohl aber einem Preßpassier-Vorgang beispielsweise für die spätere Fischmehlgewinnung unterworfen werden können.

Das Besäumen kann vor oder nach dem Trennen des Filetfleisches erfolgen. Es bestehen also wahlweise verschiedene Möglichkeiten: einerseits kann man die Bauchlappen besäumen und den Fisch erst anschließend dem Schabewerkzeug zuführen; andererseits kann aber das Besäumen und/oder ein eventuell gewünschtes Trimmen, das dann eine manuelle Nachbearbeitung z.B. hinsichtlich der Hautstücken überflüssig macht, auch parallel zum bzw. im Anschluß an das Trennen ausgeführt werden. Mit anderen Worten findet dann eine überlagerte Bearbeitung bzw. eine gegenüber der zuvor geschilderten Arbeitsfolge umgekehrte Bearbeitung statt.

Beim Nachtrimmen außerhalb der maschinellen Bearbeitung muß herkömmlicherweise in der Regel der Bauchlappen unterhalb der Flankengräten und/oder an diesen angewachsene Haut von Hand abgeschnitten werden. Solche personalaufwendigen Vorgänge können damit erfindungsgemäß eingespart werden. Durch die erfindungsgemäße Führung des Schältrennvorgangs beziehungsweise Schälschnitte mit zwei Freiheitsgraden sowie der Ausweichlichkeit/Schwenkbarkeit der Schälmesser sowohl in der Hohe als auch von der Förderebene weg wird andererseits erreicht, daß der Schälschnitt ungestört von den Wülsten unter Entfernung derselben vom Filet durchgeführt, also der Durchlaßspalt zwischen Messer und Schnittgegenlage im Moment des Überfahrens dieses Wulstes vergrößert werden kann, ohne daß die Kontinuität des Schäl- oder Schabevorgangs unterbrochen wird. Zudem ist durch die doppelte Ausweichlichkeit sichergestellt, daß der Schälvorgang entlang der sehr steifen Rippengräten ohne - wie beim herkömmlichen Flankschaben - Plattdrücken derselben in schonender Weise in bezug auf die sehr lose Verankerung der Rippen- oder Flankengräten am Fischhauptkörper vollzogen werden kann. Es ist hier also kein Abreißen mit einem Teilverbleib der Gräten im Filet zu befürchten. Im übrigen bedeutet die hohe Flexibilität des Schabewerkzeuges eine insgesamt verbesserte Einsatzfähigkeit der Maschine, weil eine leichte und genaue Anpassung des Werkzeugs an die Grätenstruktur ermöglicht wird.

In bevorzugter Weiterbildung des Verfahrens ist vorgesehen, daß das Besäumen nach Anheben der Bauchlappen unter Schnittgegenlage durch Abtrennen der inneren Bauchhaut bis zum Ende der Rippen an der Stelle deren Verbindung mit der Außenhaut erfolgt. Damit erreicht man ein sauberes Abtrennen der nicht gewünschten Bauchlappenteile exakt unter Führung entlang des Endes der Rippen- oder Flankengräten, d.h. an der Stelle, an der sich die Außenhaut mit diesen verbindet, wobei die Besäummesser die innere Bauchhaut von unten gegen die Schnittgegenlage genau bis an das Ende der Flankengräten abschneiden. Vorrichtungsmäßig ist zum Erreichen dieses Teilziels vorgesehen, daß die Besäumeinrichtung ein Paar Besäum-Kreismesser und je eine diesen zugeordnete Schnittgegenlage umfaßt, wodurch sich der erforderliche genaue Besäumschnitt in konstruktiv einfacher Weise realisieren läßt.

Da der Tilapia eine zähe bis extrem widerstandsfähige, lederartige Haut aufweist, treten jedoch beim Besäumen vor dem schälenden Trennen häufig Schwierigkeiten bezüglich der Schnittführung auf, indem die Haut nicht ganz oder überhaupt nicht durchtrennt wird. Dann stauen sich die folgenden unteren Bauchlappenteile im Trennspalt, und die Maschine verstopft letzten Endes. Um diesem Problem zu begegnen, wird von der Erfmdung weiter vorgeschlagen, das Besäumen im Anschluß an das schälende Trennen vorzunehmen. Zu diesem Zwecke kann bevorzugt die Besäumeinrichtung zum Besäumen der Bauchlappen im Bereich des Schabewerkzeuges angeordnet sein, und zwar derart, daß der Besäumschnitt vom Inneren des Fisches her durch die Bauchhaut am Ende der Rippen bis an die Außenhaut heran oder in diese hinein erfolgt. Im Ergebnis bleiben dann die Bauchlappenteile mit dem Filet unmittelbar verbunden, nämlich über die Außenhaut. Die endgültige Trennung kann beispielsweise in einem nachfolgenden Enthäutevorgang erfolgen. Ein zusätzliches, ggf. manuelles Nachbearbeiten/Nachtrimmen ist auch in diesem Fall nicht erforderlich.

Um die Beanspruchung der relativ losen Flanken- oder Rippengrätenverbindung mit dem Hauptkörper möglichst niedrig zu halten, soll nach einem anderen Weiterbildungsgedanken der Erfindung das Schälen unter einem Winkel von ≤ 10° zur Senkrechten erfolgen. Hinsichtlich der Vorrichtung können zu diesem Zweck in vorteilhafter Weiterbildung der Erfindung die Schälmesser als paarweises, zu beiden Seiten der Förderebene angeordnetes Schabemesser mit einem Schabewinkel ≤10° zur Förderebene ausgebildet und ihre Schnittgegenlagen mindestens im Einlaufbereich mit einer schlanken, geringfügig verdickten Oberkante versehen sein, wobei hier die Schneiden der Schabemesser über die Gegenlagen hinausragen. Auf diese Weise wird der relativ festen und stark gekrümmten Struktur der Flankengräten Rechnung getragen. In Verbindung mit der beschriebenen Ausweichlichkeit von Schälmesser und Gegenlage ergibt sich ein sauberer Flankenschnitt, wobei im hinteren Bereich der Schnittgegenlage die Schneide des Schabemessers abgedeckt wird, das heißt für ca. 4 mm die Schneide hinter der Gegenlage wegtaucht. Weiter verbessert werden kann dieser Effekt dadurch, daß man optional Innen- oder Unterfasen am Schabe- oder Schälmesser vorsieht. Dieses trägt besonders dazu bei, daß sich der Schälvorgang einwandfrei der Kontur der Gräten, also deren Wölbung im Bauchhöhlenbereich, anpaßt und das Schabemesser darauf gleitet, ohne sich in die Grätenstruktur hineinzuziehen.

Eine weitere Besonderheit der Fische der Spezies Tilapia besteht darin, daß diese im Analbereich und praktisch als hinteren Abschluß der Bauchhöhle eine sehr kräftige Analgräte aufweisen, die es bei Verwendung normaler Sättel mit konvex gewölbter Vorderkante und bei gleichmäßiger Bestückung mit Haltespitzen entlang der Satteloberkante, üblicherweise paarweise seitlich angeordnet, unmöglich macht, solche Fische sicher und hinsichtlich ihrer Lage eindeutig aufzusatteln. Bei konventioneller Ausbildung der Sattelvorderkante würde durch die steife Analgräte der Fisch nach einer Seite gedrückt. Ferner haben diese Fische, von der Analöffnung her in Richtung des Kopfes gesehen, eine verstärkte Hauptgräte, die ein Aufsatteln auf eine regelmäßige Spitzenanordnung entlang der Oberränder des Sattels und ein wirkungsvolles Halten durch die Spitzen ebenfalls unmöglich macht. Um dieser Probleme Herr zu werden, sollen die Fischsättel des Förderers, wenn diese mit einer Mehrzahl von den sicheren Sitz der Bauchhöhle gewährleistenden, wenigstens teilweise in die Fischstruktur eindringenden Transportspitzen versehen sind, derart ausgestaltet sein, daß vom vorderen Sattelende her zunächst zwei bis drei Transportspitzen vorgesehen sind, denen eine etwa einem Spitzenteilungsschritt entsprechende Lücke und daran anschließend nach hinten weitere Spitzen folgen. Damit wird es möglich, daß die verstärkte Hauptgräte auf der Oberkante des Sattels in dieser Lücke aufgenommen wird und im übrigen die Spitzen der Satteloberkante weiterhin, wie bekannt, an oder seitlich der Hauptgräte in die oberen Bereiche des Fisches eingreifen können, um diesen festzuhalten. Ferner können, um ein Beiseiteschieben der starren Analgräte zu vermeiden, die Sättel jeweils mit einer leicht konkaven Nase ausgebildet sein, die diese Analgräte letztlich in sich aufnimmt und somit eher zentriert, als daß sie sie zur Seite wegdrückt. Gegebenenfalls kann diese Nase mit einer scharfen Vorder- oder Oberkante ausgebildet sein, wodurch das Eindringen in die lederartige Begrenzungsmembran der Schwimmblase und deren Durchdringen erleichtert wird, so daß insgesamt für das Bedienungspersonal die mit dieser Fischspezies durch deren Strukturbesonderheiten verbundenen Schwierigkeiten beim Aufsatteln der Fische maßgeblich reduziert werden können.

Da beim Tilapia sowohl die Rückenflossen als auch die Bauchflossen relativ hart sind und bei üblichen, geteilten Rücken- und Baucheinführungen von Schabevorrichtungen Schwierigkeiten bezüglich einer einwandfreien Einführung begründen, die zu einen Ausweichen des Fischkörpers und damit zu unbrauchbaren Schnittergebnissen führen können, wird in weiterer Fortbildung der Erfindung vorgesehen, daß die Rückeneinführung als geschlossenes Winkelprofil vorgesehen sein kann, während die Baucheinführungen zum Einführen des Bauchbereiches des Fisches in die bauchseitigen Filetiermesser als doppelt gelagerte Baucheinführung, die in zwei Freiheitsgraden ausweichlich ausgebildet ist, angeordnet sein kann.

Durch die erwähnte harte und dicke Rückenflosse kann es bei der Fischspezies Tilapia auch zu Ausbeuteverlusten im Rückenbereich kommen, wenn man die Rückenmesser entsprechend den bisher bekannten Vorrichtungen nur schwach geneigt vorsieht, indem sie - wie heute üblich - zwischen sich einen Winkel bis zu 1,5° - d.h. 0,75° zur Senkrechten - einschließen. Um solchen Nachteilen zu begegnen und eine bessere Schnittausbeute zu erreichen, schlägt die Erfindung in vorteilhafter Weiterbildung vor, daß statt dessen die paarweise angeordneten Rückenmesser zwischen sich einen Winkel von etwa 2 bis 6°, vorzugsweise einen solchen von im wesentlichen 4° einschließen. Durch die größere Schrägstellung wird die Rückenflosse unterschnitten, so daß in diesen Bereich eine optimale Fleischausbeute erzielt werden kann.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1: Einzelheiten des Fisches, nämlich
- Fig. 1A: einen der Spezies Tilapia zuzurechnenden Fischkörper, wie er zur Verarbeitung gelangt,
- Fig. 1B: einen Querschnitt durch den Fischkörper entlang des angedeuteten Schnittes B-B,
- Fig. 1C: das Skelett des Fisches nach erfolgter Bearbeitung des Fischkörpers der Fig. 1A,
- Fig. 1D: das Endprodukt (Filet) mit durch Besäumen abgeschnittenem Bauchlappenteil;
- Fig. 2: eine axonometrische Darstellung der erfindungsrelevanten Teile einer für Tilapia geeigneten Filetiermaschine;
- Fig. 3A: eine Schnittansicht des Fisches beim Aufsetzen mit seiner Bauchhöhle auf einen Transportsattel etwa in Höhe der Linie III-III der Fig. 2,
- Fig. 3B: eine Draufsicht auf den Transportsattel der fig. 3A in erfindungsgemäßer struktureller Ausgestaltung;
- Fig. 4A: in Seitenansicht den Einführungsbereich des Fisches etwa in einer in Fig. 2 durch die Linie IV-IV angedeuteten Position relativ zu den Filetierwerkzeugen,
- Fig. 4B: einen Querschnitt durch die Einführung der Fig. 4A mit hier eingelegtem Fisch, in Richtung des Pfeiles B in Fig. 4A betrachtet;
- Fig. 5: einen Querschnitt, den Rückenschnitt in Höhe der Schnittebene V darstellend;
- Fig. 6A: einen Querschnitt durch den Fisch bei Durchführung des Besäumschnittes etwa in der Schnittebene VI-VI,
- Fig. 6B: eine Draufsicht auf das Besäumwerkzeug mit Schnittbegrenzung und Messerabdeckung;
- Fig. 7: einen Querschnitt durch den Fisch in Höhe der Schnittebene VII-VII der Fig. 2 in Höhe der Schäl- oder Schabevorrichtung; und
- Fig. 8: eine Seitenansicht einer weiteren Ausführungsform der Anordnung von Schabewerkzeug und Besäumeinrichtung.

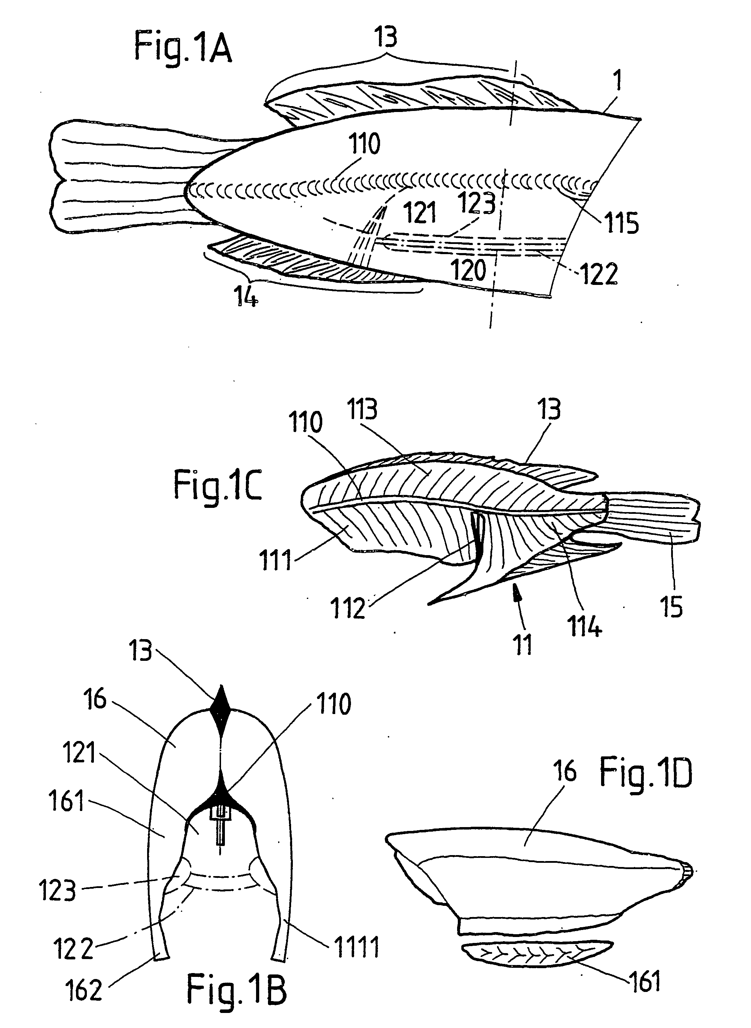

Der zur Bearbeitung bestimmte Fisch liegt in Form eines geköpften, geschlachteten und ausgenommenen, in der Bauchhöhle geöffneten Fischkörpers 1 vor, wie man ihn in Fig. 1A und B erkennt. Es handelt sich um den Körper eines Fisches der Spezies Tilapia mit im wesentlichen folgenden Eigenschaften: Diese Fische haben eine relativ starke Hauptgräte 110, allgemein auch als Rückgrat bezeichnet, von der, wie insbesondere in Fig. 1C, einer Darstellung des Skeletts oder Grätengerüstes 11 zu erkennen, nach oben über die gesamte Länge des Fisches Rückengräten 113 und nach unten im Bereich vor der Schwanzflosse 15 Bauchgräten 114 abgehen, während sich im Bereich der Bauchhöhle 120 gewölbt um diese herum, ebenfalls vom Rückgrat 110 abgehend, die Flanken- oder Rippengräten 111 erstrecken. Am Ende der Bauchöhle, vom Rückgrat 110 zum Anus hin verlaufend, weisen die Fische der Tilapia-Spezies eine relativ kompakte und steife Analgräte 112 auf, die sich zum Beginn der Bauchflossen 14 hin erstreckt. Diese Bauchflossen sind ebenfalls, d.h. wie die Rückenflossen, ausgesprochen steif und stark. Innerhalb der Bauchhöhle befinden sich auf jeder Seite, sich von den Bauchlappeninnenseiten aufwölbend, Fettgewebe umfassende Innenwülste 123, zwischen denen eine hier strichpunktiert angedeutete Trennmembran 122 lederähnlichen Charakters aufgespannt ist. Diese Membran 122 teilt die Bauchhöhle in den eigentlichen unteren Bauchhöhlenbereich 120, in dem sich die Verdauungs- und sonstigen Lebensorgane des Fisches befinden, sowie in einen oberen Bereich, der von einer bei dieser Spezies einteiligen Schwimmblase 121 eingenommen wird. Am kopfseitigen Anfang dieser Schwimmblase ist das Rückgrat 110 mit einem verstärkten Hauptgrätenteil 115 ausgestattet, der, wie später noch gezeigt wird, Schwierigkeiten beim normalen Aufsatteln des Fisches bietet.

Wie aus Fig. 1B erkennbar, erstrecken sich die hier nicht im einzelnen gezeigten Flankengräten 111 bis zu einer als Rippenende zu bezeichnenden Stelle 1111, an der die Außenhaut des Fisches praktisch mit den Rippenenden verbunden ist. Diese Stelle ist, wie erkennbar, relativ dünn. Nach unten weitet sich dann der Bauchlappen wieder auf, wie ebenfalls aus Fig. 1B zu erkennen ist. Infolge dieser "Sollbruchstelle" 1111 würde man beim normalem schabendem Filetieren in diesem Bereich, bedingt zudem durch die verhältnismäßig starke Außenhaut, ein Abreißen der Bauchlappenendteile 161 verursachen, was zu einem ästhetisch wenig ansehnlichen Produkt führen würde.

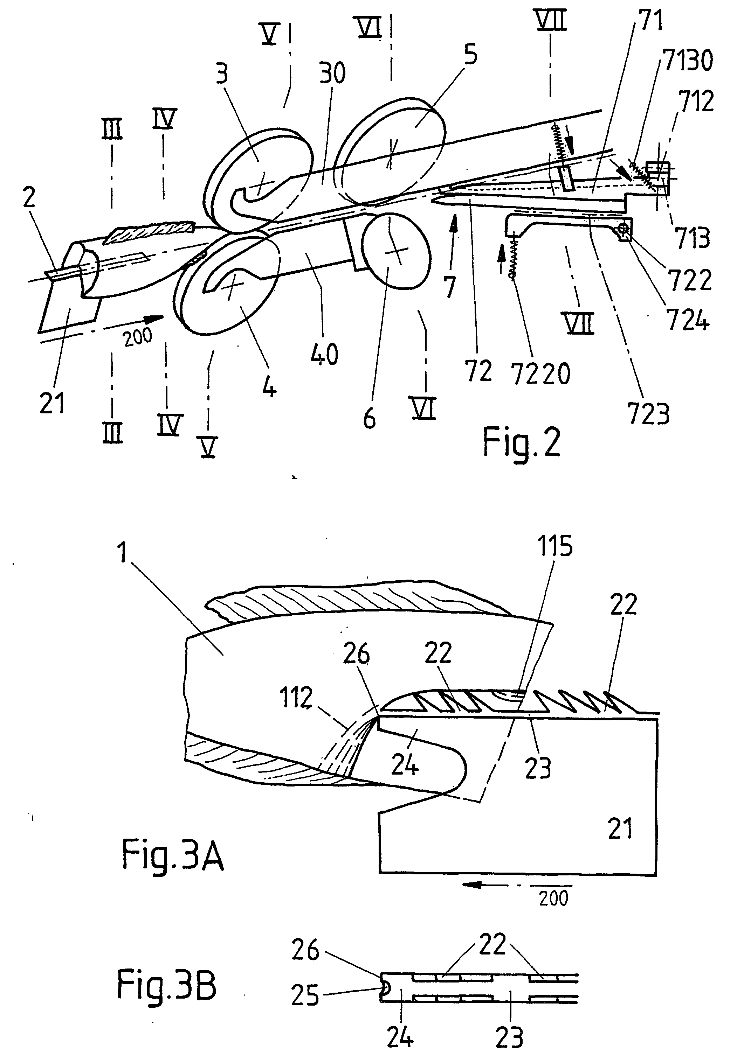

Die in Fig. 2 gezeigte Einrichtung dient der Realisierung des erfindungsgemäßen Verfahrens bei Fischen der genannten Art. Sie umfaßt einen nicht näher dargestellten, nur durch Strichpunktierung angedeuteten und endlos umlaufend angetriebenen Förderer 2 mit Fischsätteln 21, auf die der Fischkörper 1, wie in Fig. 3A dargestellt und im folgenden noch näher zu beschreiben sein wird, fest aufgesetzt wird, so daß er lagestabil durch die Vorrichtung transportiert und unter Zuhilfenahme weiterer Führungen zu den primär angestrebten Filets 16 mit einem durch Besäumen abgetrennten unteren, sekundären Bauchlappenendteil 161, der z.B. durch bekanntes Preßpassieren weiterverarbeitet werden kann, sowie einem abfallenden tertiären Grätengerüst 11 mit daran haftenden geringen Fleischresten, ebenfalls durch Preßpassieren sicherzustellen, verarbeitet werden kann.

Zu diesem Zwecke sind je ein herkömmliches Rückenwerkzeug 3 sowie Bauchwerkzeug 4, die jeweils paarweise angeordnete Kreismesser 31 bzw. 41 umfassen, vorgesehen. An das Rückenmesserpaar 31 schließt sich eine Rückenführung 30 und an das Bauchmesserpaar 41 eine Bauchführung 40 an. Mit dem Rückenwerkzeug 3 wird die Rückengräte 113 bis in die Nähe des Rückgrates 110 über die gesamte Länge des Fisches freigeschnitten, während mit Hilfe des Bauchwerkzeuges ein Freischneiden der Bauchgräte 114 zwischen Schwanzflosse 15 und Ende der Bauchhöhle 120 erfolgt. Hinter diesen beiden Werkzeugen übernehmen dann die erwähnten Rücken- und Bauchführungen 30 bzw. 40 die Führung des Grätengerüstes 11.

Zum Trennen der Filets vom Rückgrat 110 in dem noch zusammenhängenden Bereich zwischen Ende der Bauchhöhle 120 und Schwanzflosse 15 ist ein Trennwerkzeug 5 vorgesehen, das die Filets mit Hilfe eines Paares im wesentlichen paralleler Trennmesser 51 über die Hauptgräte 110 hinweg vom Grätengerüst freischneidet. Bauchseitig befindet sich ein Besäumwerkzeug 6, umfassend ein Paar im Winkel zueinander angestellter Besäummesser 61, mit dem der untere Bauchlappenteil 161 (Fig. 1D) etwa entlang des Endes der Rippengräten 111 im Bereich der Rippenenden 1111 abgetrennt wird. Beide Werkzeuge 5 und 6 sind als paarweise angeordnete Kreismesser 51 bzw. 61 vorgesehen.

Als letztes Bearbeitungswerkzeug ist ein Schabewerkzeug 7 entlang des Förderers angeordnet, das im ebenfalls paarweiser Anordnung ein Schälmesser 71 sowie Schälmessergegenlagen 72 umfaßt.

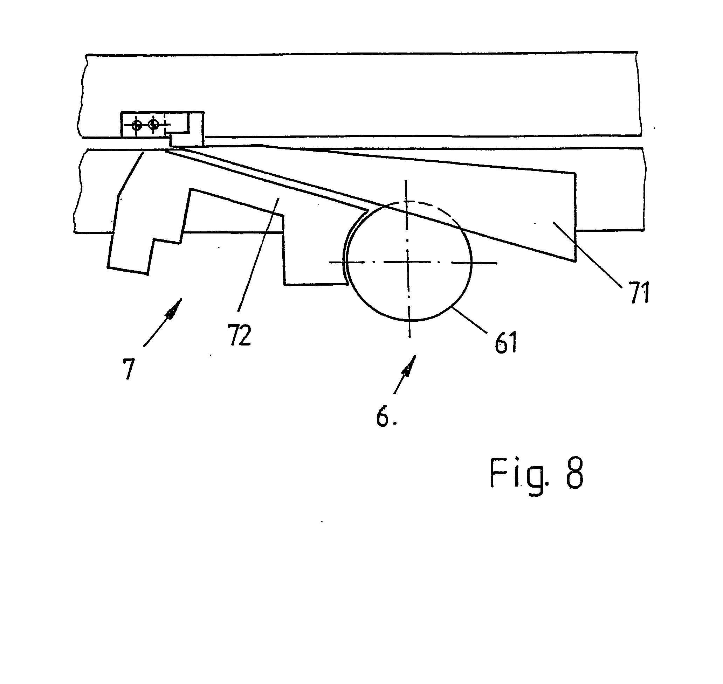

Zweckmäßigerweise ist aber auch eine Anordnung der Besäumeinrichtung 6 im Funktions- bzw. Arbeitsbereich des Schabewerkzeuges 7 möglich (siehe insbesondere Fig. 8).

Wegen die Erfindung als solche nicht unmittelbar betreffender Einzelheiten wird beispielsweise auf die bereits genannte DE 29 46 042 B1 Bezug genommen, die das Grundprinzip eines Sattel-bestückten Förderers mit Bauch-, Rücken-, Trenn- und Schabewerkzeugen widerspiegelt, allerdings nicht, wie schon dargelegt, für die Spezies Tilapia geeignet ist. Dort erkennt man übrigens auch die grundsätzliche Lage bzw. den grundsätzlichen Verlauf der Rücken- und Bauchschnitte in bezug auf den stehenbleibenden Fleischstreifen seitlich des Rückgrates, der mit Hilfe der Trennmesser im schwanzseitigen Bereich des Fisches hinter der Bauchhöhle durchgetrennt wird.

Die Funktion der erfindungsgemäßen Schritte und Anordnungen soll nunmehr anhand der Detailzeichnungen unter Eingehen auf die Besonderheiten der Fischspezies Tilapia erörtert werden:

In Fig. 3A und B ist die im Hinblick auf die schon angesprochene Verstärkung 115 der Hauptgräte erforderliche Sattelausbildung gezeigt. Um den Fisch Schwanz voraus, wie es bei der erfindungsgemäßen Verfahrensweise und Vorrichtungsanordnung erforderlich ist, durch die Maschine fördern zu können, wird er nach dem Köpfen, Schlachten und Anbringen des unteren Öffnungsschnitts der Bauchhöhle mit der Köpffläche voraus auf einen üblichen, beispielsweise ebenfalls aus der DE 29 46 042 B1 bekannten Sattel 21 aufgesetzt, der entlang seiner seitlichen Oberkanten mit einer Reihe von Transportspitzen 22 versehen ist. Diese Transportspitzen sind entgegen der Aufschiebrichtung des Fisches und damit in Richtung dessen späteren Transportes, angedeutet durch den Pfeil 200, geneigt. Während bei herkömmlichen Sätteln diese beidseitigen Spitzenreihen durchgehend angeordnet sind, ist bei der Erfindung eine Anordnung getroffen, wonach, vom vorderen Sattelende 24 her betrachtet, zunächst zwei oder drei Spitzen vorhanden sind und dann eine Lücke 23 angebracht ist, die den verstärkten Hauptgrätenteil 115, wie aus Fig. 3A erkennbar, aufnimmt, während anschließend weitere Transportspitzen 22 folgen. In diese Lücke 23 kann sich die Verstärkung 115 einlagern, während die vorderen Transportspitzen um die Wirbelsäule herum in den Fischkörper eindringen und diesen festsetzen. Die nachfolgenden Spitzen werden dann je nach Länge des Fischkörpers 1 wirksam.

Damit die sehr starre Analgräte 112, die ebenfalls in Fig. 3A angedeutet ist, nicht dazu führen kann, daß der Fisch beim erforderlichen kräftigen Aufschieben seitlich weggedrückt wird, was zu unbefriedigenden Schnittergebnissen und einem minderwertigen Produkt führen würde, ist die Nase 25 des Sattelendes 24 konkav ausgebildet. Sie kann somit in sich diese Analgräte aufnehmen bzw. mit deren Hilfe den Fischkörper 1 zentrieren.

Wie erkennbar, führen die gegen die Aufschiebrichtung des Fisches geneigten scharfen Zähne 22 in Verbindung mit einer geschärften Vorderkante 26 des Sattels dazu, daß die die Bauchhöhle unterteilende und die Schwimmblase 121 abgrenzende Trennmembran 122 so zerstört wird, daß sie kein Hindernis mehr für die weitere Bearbeitung bildet.

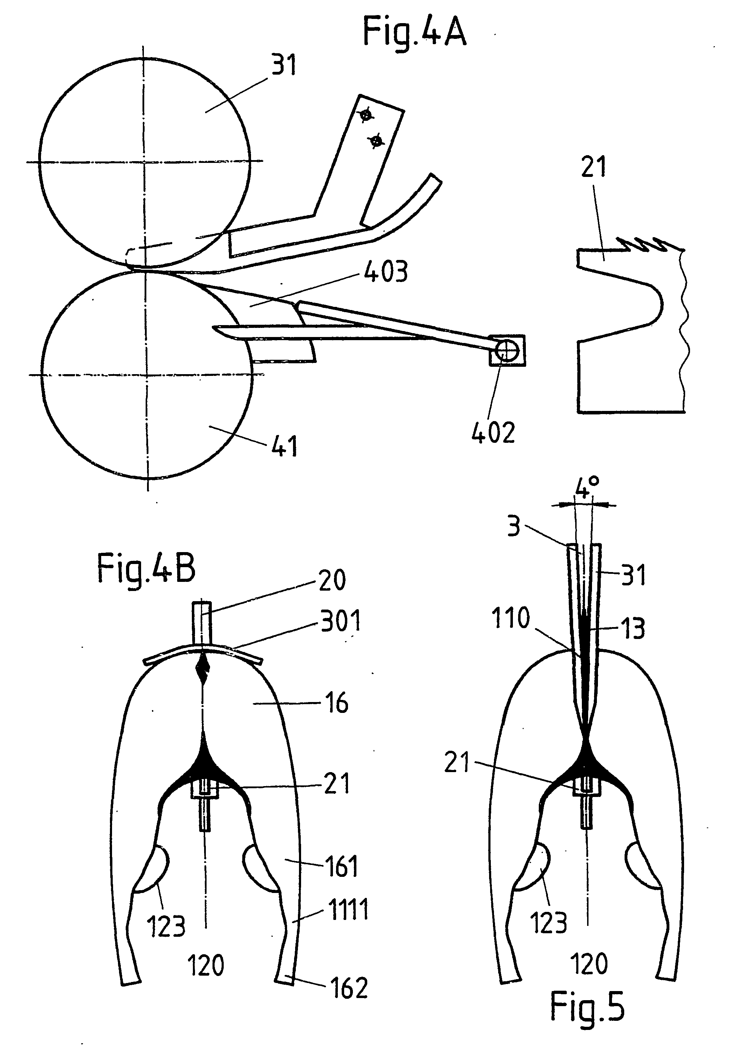

Fig. 4A und B zeigen den Einführbereich etwa in Höhe der Linie IV-IV der Fig. 2. Zum Zwecke der funktionsgerechten Beherrschung der harten, sehr widerstandsfähigen Rükkenflossen 13 einerseits sowie der ebenso kompakten Bauchflossen 14 sind je eine Rükkeneinführung 301 und Baucheinführung 401 angeordnet. Die Rückeneinführung 301 ist, wie besser aus Fig. 4B erkennbar, als Winkelprofil ausgebildet. Die Baucheinführung 401, die die Einführung der schwanzseitigen Bauchflosse übernimmt, ist in zwei Freiheitsgraden ausweichlich ausgebildet, nämlich einerseits um die sich senkrecht zur Blattebene der Fig. 4A erstreckende Achse 402 höhenverstellbar sowie andererseits mit ihren Führungsblechen 403, die zu beiden Seiten des Förderweges beabstandet vorgesehen sind, senkrecht zur Blattebene und damit zur Förderebene ausweichlich. Die Förderebene 20 ist der guten Ordnung halber in Fig. 4B dargestellt, die im übrigen im Fischinneren den Sattel 21 zeigt, weil dieser Schnitt IV-IV im Bauchhöhlenbereich verläuft.

Fig. 5 zeigt einen Querschnitt durch den Fisch in Höhe des Rückenwerkzeugs 3 bzw. der Rückenmesser 31, wobei dieser Schnitt in Fig. 2 durch die strichpunktierte Linie V angedeutet ist. Die beiden Rückmesser 31 sind im Winkel von 4° zueinander angestellt, so daß sie, wie zu erkennen, die starke Rückenflosse 13 unterschneiden und folglich ein Optimum an Fleisch am Filet 16 belassen, indem sie bis dicht an die Wirbelsäule 110 heranschneiden.

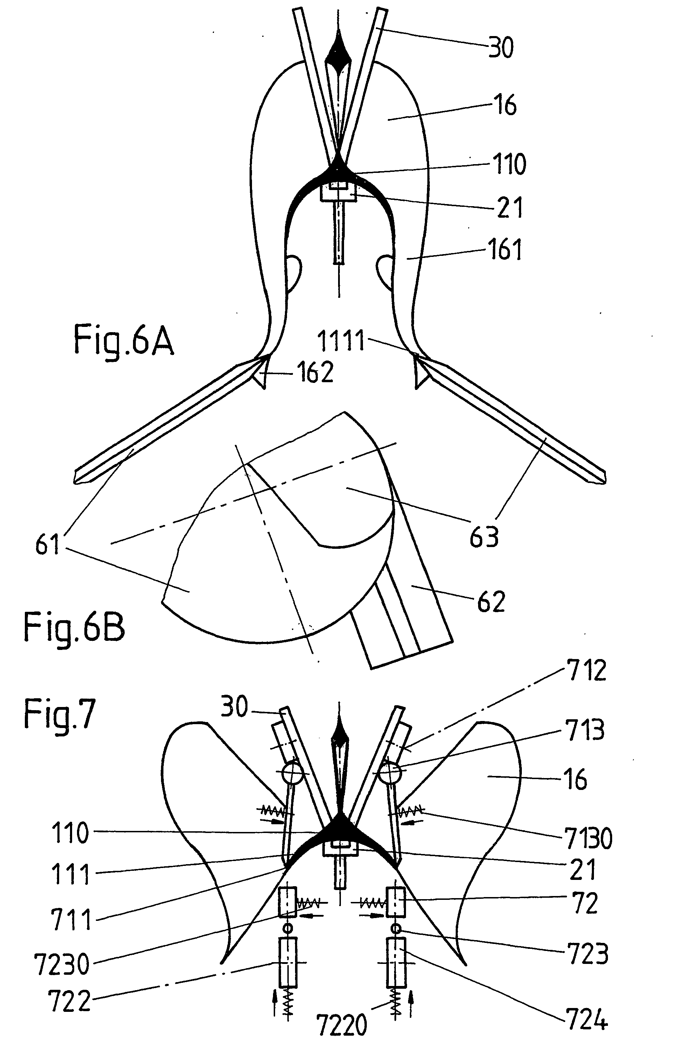

Der entsprechend der Linie VI-VI der Fig. 2 gelegte Schnitt durch den Fisch gemäß Fig. 6A zeigt das Besäumen der Bauchlappen 161 mit Hilfe des Besäumwerkzeugs 6 in Form eines Paares Besäummesser 61. Im Schnitt ist hier eine in der Draufsicht erkennbare Besäumschnittgegenlage 62 weggelassen. Man erkennt, daß die Besäummesser 61 im unteren Teil der Bauchlappen 161 dort, wo die Flanken- oder Rippengräten 111 enden und praktisch eine Verbindung mit der Außenhaut des Fisches herstellen, die unteren Bauchlappenenden 162 abtrennen, wobei die Schnittgegenlagen 62 von innen, also der Bauchhöhle 120 her mit den Messerschneiden zusammenwirken. Eine Messerabdeckung 63 sorgt dafür, daß am Ende des Besäumschnittes das Filet über die Besäummesser 61 angehoben wird, so daß letztere nicht in das Filet einschneiden können und kein wertvolles Filetfleisch verloren geht.

Fig. 7 zeigt im Detail das Schabewerkzeug 7 in einem Schnitt etwa entlang der Linie VII-VII. Von Rückenführungen 30 von oben her am Rückgrat und mittels des Sattels 21 von unten am Rückgrat 110 angreifend geführt, gelangt der in den Filets von der Bauchgräte/den Bauchspeichen sowie der Rückengräte/den Rückenspeichen und um das Rückgrat herum freigeschnittene Fisch in den Bereich der Spitzen der Schälmesser 71, die von oben her, an den Wirbelfortsätzen der Wirbelsäule 110 ansetzend, aufgrund ihrer divergierenden Ausbildung - wie sie schon in DE 29 46 042 B 1 beschrieben ist - entlang der Oberkanten der Flankengräten oder Rippen 111 das Filetfleisch freischälen. Dies erfolgt im Zusammenwirken mit den Schälmessergegenlagen 72, indem die Rippen durch den gegen Federkraft in seiner Breite je nach Dicke der Gräten veränderbaren Spalt zwischen den Schälkanten 711 der Schälmesser 71 und den Oberkanten der Schälmessergegenlagen 72 hindurchbewegt werden. Um ein genaues Anheben über die Wülste 123, die hier aus Vereinfachungsgründen nicht dargestellt sind, sicherzustellen und damit zu vermeiden, daß in diesem Bereich irgendwie Teile der Filets eingeschnitten werden, sind die Schälmesser 71 ebenso wie die Schälmessergegenlagen 72 neben ihrer - üblichen - Höhenverstellbarkeit auch seitlich ausschwenkbar angeordnet. Für die Höhenverschwenkbarkeit sind die Schälmesser 71 um Schwenkachsen 712, die im wesentlichen senkrecht zur Förderebene verlaufen und hier leicht geneigt angeordnet sind, höhenverschwenkbar, während die Schnittgegenlagen 72 um entsprechende Gegenlagenschwenkachsen 722 höhenverstellbar gelagert sind. Diese Höhenverschwenkbarkeit erfolgt gegen die Kraft entsprechender Federn, von denen hier die für die Schälmesser 71 weggelassen sind, während für die Gegenlagen 72 Federn 7220 für den erforderlichen Gegenlagedruck sorgen. Die seitliche Verschwenkbarkeit, also das Ausweichen der Schälmesser 71 und der Gegenlagen 72, wird durch Lagerung dieser Werkzeugteile an Scharnierachsen 713 bzw. 723 besorgt, wobei auch dies unter federnder Ausweichlichkeit mit Hilfe entsprechender Druckfedern 7130 bzw. 7230 gewährleistet wird.

Als vorteilhafte Variante gegenüber dem bereits geschilderten Ablauf des Besäumens der Bauchlappen 161 vor dem nachfolgenden Trennen des Filets mit entsprechender Anordnung der Besäumeinrichtung 6 vor dem Schabewerkzeug 7 zeigt die Fig. 8 eine insbesondere für Tilapia-Fische mit extrem zäher Haut geeignete Anordnung, in der die Besäumeinrichtung 6 unmittelbar innerhalb des Funktions- bzw. Arbeitsbereich des Schabewerkzeuges 7 angeordnet ist. Bei einer solchen Anordnung gelangt der in den Filets von der Bauchgräte/den Bauchspeichen sowie der Rückengräte/den Rückenspeichen und um das Rückrat herum freigeschnittene Fisch zunächst in den Bereich der Spitzen der Schälmesser 71. Das eigentliche Schaben bzw. Trennen erfolgt im Zusammenwirken mit den Schälmessergegenlagen 72. Das Filetfleisch wird also entlang der Oberkanten der Flankengräten oder Rippen 111 freigeschält. Erst im Anschluß an das Freischälen des Filets, mindestens bis zu der Aufschnittstelle des Besäumschnittes werden die Bauchlappen 161 besäumt, so daß also der Anschnitt des schälenden Trennens zeitlich vor dem Anschnitt zum Besäumen/Trimmen liegt. Dadurch, daß der Fisch zunächst in den Bereich des Schabewerkzeuges 7 gelangt, werden die Rippen von den Filets bis zum Anschnitt des Besäumwerkzeuges freigeschält, worauf dann erst das Besäumen, und zwar in der Weise stattfindet, daß das Besäummesser 6 von unten her bis zur Außenhaut hin einen Trennschnitt vornimmt. Eine zusätzliche Schnittgegenlage ist hierbei nicht erforderlich, solange sich das Besäummesser, wie erkennbar, im Bereich des Schabewerkzeuges 7 befindet, das für den nötigen Gegendruck sorgt. Die weitere Bearbeitung erfolgt in der gleichen bereits weiter oben beschriebenen Weise, allerdings mit dem Unterschied, daß die Bauchlappenteile, mit den Filets über die Haut verbunden, mit diesen mitgeführt werden, bis z.B. ein späterer Enthäutevorgang für die endgültige Trennung sorgt.

Um ein einfaches Wechseln in der Position des Besäumwerkzeuges zu erreichen, also die Vorrichtung insgesamt schnell unterschiedlichen Fischgrößen anpassen zu können, ist es ohne weiteres möglich, entweder an der Maschine mehrere Auswechselpositionen für die Lagerung der Besäumeinrichtung vorzusehen oder letztere auf einer Lagerschiene od. dgl. anzuordnen, auf der sie leicht und stufenlos verschiebbar und festzusetzen ist. Dabei kann natürlich auch verschiedenen Neigungswinkeln für das Besäumwerkzeug Rechnung getragen werden, das, wie aus der Zeichnung erkennbar, in Fig. 6 für den Schnitt von außen im wesentlichen geneigt zur (gedachten) Förderebene angeordnet sein sollte, während es gemäß Fig. 8 für den Schnitt von innen mit seiner Messerebene praktisch parallel zu dieser Förderebene liegen kann.

Zur Erleichterung des Schäl- oder Schabevorgangs unter Anpassung an die härteren Oberflächen der Gräten ohne Gefahr des Einschneidens in diese, wie man dieses beispielsweise von fasenfreien Rasierklingen her kennt, sind die Schabemesser 71 an ihren den Gräten zugekehrten Innen- oder Unterkantenbereichen mit Innen- oder Unterfasen versehen sind, die hier jedoch nicht näher gezeigt sind.

Auf weitere Details der erfindungsgemäßen, aber lediglich beispielhaft wiedergegebenen Anordnung kann, da deren Funktionsprinzip aus den Darstellungen erkennbar ist, verzichtet werden. Es sei lediglich darauf hingewiesen, daß aus konstruktiven Gründen z.B. die Schälschnittgegenlagen 72 zweiteilig ausgebildet sind und die eigentliche Gegenlage 72 an einem Träger 724 sitzt, so daß dieser mit dem Federdruck der Druckfeder 7220 beaufschlagt wird und somit die eigentliche Gegenlage 72 nicht durch zusätzliche Bauchteile in ihrer Funktion behindert wird, d.h. genügend Platz für das Schälen oder Schaben des Fisches zur Verfügung steht. Auch kann die Schwenkachse 712 maschinenfest an einem Lagerbock angeordnet sein; sie muß also nicht unbedingt an der Rükkenführung 30 sitzen, wie dies hier aus Gründen der Zweckmäßigkeit erfolgt ist.

## Patentansprüche

1. Verfahren zum Filetieren geköpfter, geschlachteter und in ihrer Bauchhöhle geöffneter Fische, insbesondere zur Massenverarbeitung bestimmter Massen- und/oder Zuchtfische wie Tilapia, wobei die Filets mittels
a) im Rückenbereich bis an die Wirbelsäule (110) geführter, die Rückenspeichen (113) freilegender Rückenschnitte,
b) bauchseitig im Schwanzbereich (15) bis an die Wirbelsäule geführter, die Bauchspeichen (114) freilegender Bauchschnitte,
c) über die Wirbelsäule hinweg geführter, die Rücken- und Bauchschnitte verbindender Trennschnitte und
d) entlang der die Bauchhöhle (120) umgebenden Rippen (111) von der Wirbelsäule her bei ausweichlichem Gegendruck erfolgenden schälenden Trennens
vom Grätengerüst (11) gelöst werden,
**dadurch gekennzeichnet,daß**
e) vor dem schälenden Trennen im Bereich der Bauchhöhle die Bauchlappen (161) durch Abtrennen der Enden ihrer über die Rippen hinausragenden Bauchlappenteile (162) besäumt werden und
f) anschließend das schälende Trennen durch sich der Rippenkontur (111) anpassende, mit mindestens zwei Freiheitsgraden geführte Schälschnitte vollzogen wird.

2. Verfahren nach Anspruch 1, **dadurch gekennzeichnet, daß** das Besäumen nach Anheben der Bauchlappen unter Schnittgegenlage durch Abtrennen der inneren Bauchhaut bis zum Ende der Rippen an der Stelle deren Verbindung mit der Außenhaut erfolgt.

3. Verfahren nach Anspruch 1 oder 2, **dadurch gekennzeichnet, daß** das Schälen unter einem Winkel von ≤ 10° zur Senkrechten erfolgt.

4. Vorrichtung zum Filetieren geköpfter, geschlachteter und in ihrer Bauchhöhle geöffneter Fische, insbesondere zur Massenverarbeitung bestimmter Massen- und/oder Zuchtfische wie Tilapia, umfassend
a) Rückenmesser (31) zum Freilegen der Rückenspeichen (113) bis an die Wirbelsäule (110) heran;
b) Bauchmesser (41) zum Freilegen der Bauchspeichen (114) im Schwanzbereich (15) bis an die Wirbelsäule heran;
c) Trennmesser (51) zum Trennen der Filets im Schwanzbereich von der Wirbelsäule unter Durchschneiden des von Bauch- und Rückenmessern um die Wirbelsäule belassenen Steges;
d) ein Schälmesser (71) und Schälmessergegenlagen (72) einschließendes Schabewerkzeug (7) zum schälenden Trennen der Filets von den die Bauchhöhle (120) umgebenden Rippen (111) bei ausweichlichem Gegendruck von der Wirbelsäule her;
e) einen endlosen Förderer (2) zum Transport der Fische Schwanz voraus und an den zu beiden Seiten einer gedachten Förderebene (20) angeordneten Werkzeugen gemäß a) bis d) vorbei sowie
f) eine Anzahl auf dem Förderer angeordneter Fischsättel (21) zur sicheren Aufnahme der Fische in ihrer Bauchhöhle zum Zwecke des Transports und der Bearbeitung mittels der Werkzeuge,
**dadurch gekennzeichnet, daß**
g) das Schabewerkzeug (7) sowohl um eine im wesentlichen senkrecht zur Förderebene (20) verlaufende Achse (712) federnd ausweichlich schwenkbar als auch um eine im wesentlichen in Richtung der Schälkanten (711) verlaufende Scharnierachse (713) gegen Federkraft von der Förderebene weg schwenkbar sind; und
h) wahlweise vor dem Schabewerkzeug (7) oder im Bereich desselben eine Besäumeinrichtung (6) zum Besäumen der Bauchlappen (161) im Bereich der Bauchhöhle (120) durch Abtrennen ihrer über die Rippen hinausragenden Bauchlappenteile (162) angeordnet ist.

5. Vorrichtung nach Anspruch 4, **dadurch gekennzeichnet, daß** die Besäumeinrichtung (6) ein Paar Besäum-Kreismesser (61) umfaßt.

6. Vorrichtung nach Anspruch 5, **dadurch gekennzeichnet, daß** die Besäumeinrichtung (6) zusätzlich je eine den Besäum-Kreismessern (61) zugeordnete Schnittgegenlage (62) umfaßt.

7. Vorrichtung nach einem der Ansprüche 4 oder 6, **dadurch gekennzeichnet**, **daß** die Schälmesser (71) als paarweises, zu beiden Seiten der Förderebene angeordnetes Schabemesser mit einem Schabewinkel ≤10° zur Förderebene (20) ausgebildet und ihre Schnittgegenlagen (72) mindestens im Einlaufbereich mit einer schlanken, geringfügig verdickten Oberkante versehen sind, wobei hier die Schneiden der Schabemesser über die Gegenlagen hinausragen.

8. Vorrichtung nach Anspruch 7, **dadurch gekennzeichnet, daß** die Schälmesser (71) mit einer Innen- oder Unterfase versehen sind.

9. Vorrichtung nach einem der Ansprüche 4 bis 8, bei der die Fischsättel (21) des Förderers (2) mit einer Mehrzahl von den sicheren Sitz der Bauchhöhle gewährleistenden, wenigstens teilweise in die Fischstruktur eindringenden Transportspitzen (22) versehen sind, **dadurch gekennzeichnet, daß** vom vorderen Sattelende (24) her zunächst zwei bis drei Transportspitzen (22) vorgesehen sind, denen eine etwa einem Spitzenteilungsschritt entsprechende Lücke (23) und daran anschließend nach hinten weitere Spitzen (21) folgen.

10. Vorrichtung nach einem der Ansprüche 4 bis 9, **dadurch gekennzeichnet, daß** die Sättel (21) jeweils mit einer leicht konkaven Nase (25), ggf. mit scharfer Vorderkante (26), ausgebildet sind.

11. Vorrichtung nach einem der Ansprüche 4 bis 10, umfassend wenigstens eine Rückeneinführung (301) zur Gleitführung der Rückenflosse (13) im Fischeinzugsbereich, **dadurch gekennzeichnet, daß** die Rückeneinführung als geschlossenes Winkelprofil vorgesehen ist.

12. Vorrichtung nach einem der Ansprüche 4 bis 11, umfassend Baucheinführungen zum Einführen des Bauchbereiches des Fisches (1) in die bauchseitigen Filetiermesser (41), **dadurch gekennzeichnet, daß** die Baucheinführung (401) doppelt gelagert und in zwei Freiheitsgraden ausweichlich ausgebildet ist.

13. Vorrichtung nach einem der Ansprüche 4 bis 12, **dadurch gekennzeichnet, daß** die Rückenmesser (31) paarweise angeordnet sind und zwischen sich einen Winkel von 2 bis 6° einschließen.

14. Vorrichtung nach Anspruch 13, **dadurch gekennzeichnet, daß** die Rückenmesser (31) zwischen sich einen Winkel von im wesentlichen 4° einschließen.

## Claims

1. Method for filleting fish which have been beheaded, slaughtered and had their ventral cavity opened, in particular for the large-scale processing of certain farmed and/or breeding fish such as tilapia, wherein the fillets are detached from the bone structure (11) by means of
a) dorsal cuts made in the dorsal region as far as the vertebral column (110) and exposing the dorsal spokes (113),
b) ventral cuts made on the ventral side in the caudal region (15) as far as the vertebral column and exposing the ventral spokes (114),
c) separating cuts made over the vertebral column and connecting the dorsal and ventral cuts and
d) peeling separation which under laterally yielding counterpressure is effected from the vertebral column along the ribs (111) surrounding the ventral cavity (120),
**characterised in that**
e) before peeling separation in the region of the ventral cavity the ventral lobes (161) are trimmed by separation of the ends of their ventral lobe portions (162) projecting beyond the ribs and
f) then peeling separation is completed by peeling cuts adapted to the rib contour (111) and made with at least two degrees of freedom.

2. Method according to claim 1, **characterised in that** trimming is effected after lifting the ventral lobes under the cutting support by separation of the inner ventral skin as far as the end of the ribs at their point of connection to the outer skin.

3. Method according to claim 1 or 2, **characterised in that** peeling is effected at an angle of ≤10° to the perpendicular.

4. Apparatus for filleting fish which have been beheaded, slaughtered and had their ventral cavity opened, in particular for the large-scale processing of certain farmed and/or breeding fish such as tilapia, including
a) dorsal blades (31) for exposing the dorsal spokes (113) up to the vertebral column (110);
b) ventral blades (41) for exposing the ventral spokes (114) in the caudal region (15) up to the vertebral column;
c) separating blades (51) for separating the fillets in the caudal region from the vertebral column, cutting through the ridge left by ventral and dorsal blades around the vertebral column;
d) a scraping tool (7) including peeling blades (71) and peeling blade supports (72) for peeling separation of the fillets from the ribs (111) surrounding the ventral cavity (120) under laterally yielding counterpressure from the vertebral column;
e) an endless conveyor (2) for transport of the fish tail first and past the tools according to a) to d) arranged on both sides of an imaginary conveying plane (20) and also
f) a number of fish saddles (21) arranged on the conveyor for reliably holding the fish in their ventral cavity for the purpose of transport and processing with the tools,
**characterised in that**
g) the scraping tool (7) is both pivotable with lateral spring yielding about an axis (712) running essentially perpendicularly to the conveying plane (20) and pivotable away from the conveying plane against spring force about a hinge axis (713) running essentially in the direction of the peeling edges (711); and
h) optionally in front of the scraping tool (7) or in the region thereof is arranged a trimming device (6) for trimming the ventral lobes (161) in the region of the ventral cavity (120) by separation of their ventral lobe portions (162) projecting beyond the ribs.

5. Apparatus according to claim 4, **characterised in that** the trimming device (6) includes a pair of circular trimming blades (61).

6. Apparatus according to claim 5, **characterised in that** the trimming device (6) additionally includes a cutting support (62) allocated to each of the circular trimming blades (61).

7. Apparatus according to either of claims 4 or 6, **characterised in that** the peeling blades (71) are designed as scraping blades arranged in pairs on both sides of the conveying plane with a scraping angle of ≤10° to the conveying plane (20) and their cutting supports (72) at least in the input region are provided with a slender, slightly thickened upper edge, wherein here the cutting edges of the scraping blades project beyond the supports.

8. Apparatus according to claim 7, **characterised in that** the peeling blades (71) are provided with an inner or lower chamfer.

9. Apparatus according to any of claims 4 to 8, in which the fish saddles (21) of the conveyor (2) are provided with a plurality of transport spikes (22) which ensure reliable seating of the ventral cavity and at least partially penetrate the fish structure, **characterised in that** from the front saddle end (24) there are provided initially two to three transport spikes (22) which are followed by a gap (23) roughly corresponding to a spike division step and then, following on behind, additional spikes (21).

10. Apparatus according to any of claims 4 to 9, **characterised in that** the saddles (21) are in each case designed with a slightly concave projection (25), if occasion arises with a sharp front edge (26).

11. Apparatus according to any of claims 4 to 10, including at least one dorsal inlet guide (301) for guiding the dorsal fin (13) in sliding relationship in the fish input region, **characterised in that** the dorsal inlet guide is provided as a closed angle profile.

12. Apparatus according to any of claims 4 to 11, including ventral inlet guides for introducing the ventral region of the fish (1) into the filleting blades (41) on the ventral side, **characterised in that** the ventral inlet guide (401) is double-mounted and designed for lateral yielding in two degrees of freedom.

13. Apparatus according to any of claims 4 to 12, **characterised in that** the dorsal blades (31) are arranged in pairs and form between them an angle of 2 to 6°.

14. Apparatus according to claim 13, **characterised in that** the dorsal blades (31) form between them an angle of essentially 4°.

## Revendications

1. Procédé pour retirer des filets de poissons étêtés, éventrés et vidés, en particulier pour le traitement à grande échelle d'une grande quantité de poissons et/ou de poissons d'élevage tels que le tilapia, les filets étant détachés de la structure squelettique en effectuant
a) des découpes dorsales dans la région dorsale jusqu'au niveau de la colonne vertébrale (110) pour dégager les arêtes dorsales (113),
b) des découpes ventrales dans la région de la queue (15) du côté ventral jusqu'au niveau de la colonne vertébrale pour dégager les arêtes ventrales (114),
c) des découpes de séparation qui sont réalisées par-dessus la colonne vertébrale et qui relient les découpes dorsales et les découpes ventrales,
d) un dépouillement le long des côtes (111) entourant l'abdomen (120) en exerçant une légère contre-pression du côté de la colonne vertébrale
**caractérisé en ce que**
e) avant le dépouillement, les lobes ventraux (161) sont découpés dans la région de l'abdomen en séparant les extrémités de leurs parties (162) qui font saillie au-dessus des côtes, puis
f) le dépouillement est effectué en découpant la peau suivant le contour des côtes (111) avec au moins deux degrés de liberté.

2. Procédé selon la revendication 1, **caractérisé en ce que** le découpage est effectué après avoir relevé les lobes ventraux, sous le support de découpage, en séparant la peau intérieure du ventre jusqu'à l'extrémité des côtes à l'endroit de sa liaison avec la peau extérieure.

3. Procédé selon la revendication 1 ou 2, **caractérisé en ce que** le dépouillement est effectué avec un angle inférieur ou égal à 10° par rapport à la verticale.

4. Dispositif pour retirer des filets de poissons étêtés, éventrés et vidés, en particulier pour le traitement à grande échelle d'une grande quantité de poissons et/ou de poissons d'élevage tels que le tilapia, le dispositif comportant
a) un couteau de découpe dorsale (31) destiné à dégager les arêtes dorsales (113) jusqu'au niveau de la colonne vertébrale (110) ;
b) un couteau de découpe ventrale (41) destiné à dégager les arêtes ventrales (114) dans la région de la queue (15) jusqu'au niveau de la colonne vertébrale ;
c) un couteau de séparation (51) destiné à séparer les filets dans la région de la queue de la colonne vertébrale en découpant la nervure laissée autour de la colonne vertébrale par les couteaux de découpe ventrale et de découpe dorsale ;
d) un racloir (7) incluant des couteaux de dépouillement (71) et des supports de couteau de dépouillement (72), ledit racloir étant destiné à retirer les filets des côtes (111) entourant l'abdomen (120) en exerçant une légère contre-pression du côté de la colonne vertébrale ;
e) un transporteur sans,fin (2) destiné à transporter les poissons la queue en avant et à les faire passer sur les outils placés des deux côtés d'un plan de transport imaginaire (20) par rapport aux éléments a) à d) et
f) un certain nombre de chariots de support de poisson (21) placés sur le transporteur et destinés à recevoir de façon sûre les poissons en s'engageant dans leur abdomen afin de les transporter et les traiter avec les outils,
**caractérisé en ce que**
g) le racloir (7) est apte à pivoter légèrement de façon élastique autour d'un axe (712) s'étendant sensiblement perpendiculairement au plan de transport (20) et à s'écarter du plan de transport en pivotant autour d'un axe de charnière (713) s'étendant sensiblement en direction des arêtes de dépouillement (711) en s'opposant à la force d'un ressort, et
h) un dispositif de découpage (6) destiné à découper les lobes ventraux (161) dans la région de l'abdomen (120), en séparant leur parties (162) saillant au-dessus des côtes, est placé au choix en avant du racloir (7) ou au niveau de celui-ci.

5. Dispositif selon la revendication 4, **caractérisé en ce que** le dispositif de découpage (6) comporte une paire de couteaux de découpage circulaires (61).

6. Dispositif selon la revendication 5, **caractérisé en ce que** le dispositif de découpage (6) comporte en plus un support de découpe (62) associé à chacun des couteaux de découpage circulaires (61).

7. Dispositif selon l'une des revendications 4 ou 6, **caractérisé en ce que** les couteaux de dépouillement (71) sont conformés en couteaux de dépouillement placés par paires des deux côtés du plan de transport en faisant un angle de dépouillement inférieur ou égal à 10° avec le plan de transport (20) et leurs supports de découpe (72) sont dotés au moins dans la région d'insertion d'un mince bord supérieur légèrement épaissi, les lames des couteaux de dépouillement saillant au-dessus des supports.

8. Dispositif selon la revendication 7, **caractérisé en ce que** les couteaux de dépouillement (71) sont dotés d'un biseau intérieur ou d'un biseau inférieur.

9. Dispositif selon l'une des revendications 4 à 8, dans lequel les chariots de support de poisson (21) du transporteur (2) sont dotés d'une pluralité de pointes de transport (22) garantissant la mise en place sûre de l'abdomen et pénétrant au moins partiellement dans la structure du poisson, **caractérisé en ce que**, du côté de l'extrémité avant (24) du chariot de support, il est tout d'abord prévu deux ou trois pointes de transport (22) auxquelles font suite un vide (23), correspondant à peu près à l'écartement des pointes, puis d'autres pointes (21).

10. Dispositif selon l'une des revendications 4 à 9, **caractérisé en ce que** chacun des chariots (21) est conformé avec un menton (25) légèrement concave, le cas échéant avec une arête avant (26) vive.

11. Dispositif selon l'une des revendications 4 à 10, lequel dispositif comporte au moins un dispositif d'insertion dorsale (301) destiné à faire glisser la nageoire dorsale (13) dans la région d'introduction de poisson, **caractérisé en ce que** le dispositif d'insertion dorsale est prévu sous la forme d'une cornière fermée.

12. Dispositif selon l'une des revendications 4 à 11, lequel dispositif comporte des dispositifs d'insertion ventrale destinés à l'insertion de la région ventrale du poisson (1) dans les couteaux à filet (41) situés du côté ventral,
**caractérisé en ce que** le dispositif d'insertion ventrale (401) est monté en double et est conformé pour être souple avec deux degrés de liberté.

13. Dispositif selon l'une des revendications 4 à 12, **caractérisé en ce que** les couteaux de découpe dorsale (31) sont placés par paires et forment entre eux un angle de 2 à 6°.

14. Dispositif selon la revendication 13, **caractérisé en ce que** les couteaux de découpe dorsale (31) forment entre eux un angle de 4° sensiblement.
